(19)

**Europäisches Patentamt**
**European Patent Office**
**Office européen des brevets**

(11) **EP 4 296 898 A1**

(12) **EUROPEAN PATENT APPLICATION**

(43) Date of publication:
**27.12.2023 Bulletin 2023/52**

(21) Application number: **22181077.3**

(22) Date of filing: **24.06.2022**

(51) International Patent Classification (IPC):
**G06N 3/0442** (2023.01)   **G06N 3/045** (2023.01)
**G06N 3/047** (2023.01)   **G06N 3/0475** (2023.01)
**G06N 3/09** (2023.01)   **G08G 1/01** (2006.01)

(52) Cooperative Patent Classification (CPC):
**G06N 3/0442; G06N 3/045; G06N 3/047;**
**G06N 3/0475; G06N 3/09; G08G 1/01**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
  **Toyota-shi, Aichi-ken, 471-8571 (JP)**
• **ETH Zurich - The Swiss Federal Institute of**
  **Technology Zurich**
  **8092 Zurich (CH)**

(72) Inventors:
• **ABBELOOS, Wim**
  **1140 BRUSSELS (BE)**

• **ZHANG, Zhejun**
  **8092 ZURICH (CH)**
• **LINIGER, Alexander**
  **8092 ZURICH (CH)**
• **DAI, Dengxin**
  **8092 ZURICH (CH)**
• **YU, Fisher**
  **8092 ZURICH (CH)**
• **VAN GOOL, Luc**
  **8092 ZURICH (CH)**

(74) Representative: **Cabinet Beau de Loménie**
  **158, rue de l'Université**
  **75340 Paris Cedex 07 (FR)**

Remarks:
Amended claims in accordance with Rule 137(2)
EPC.

(54) **PREDICTION METHOD AND SYSTEM, COMPUTER PROGRAM, COMPUTER-READABLE MEDIUM**

(57)    Method for predicting a future state ($s_{t+1}$) at a future time step (t+1) of mobile agents, the state ($s_t$) of a mobile agent comprising a pose and an attribute (u) of the agent.

The method comprises:
S100) obtaining a current shared context (M,C) comprising at least a map (M);
S200) obtaining a current state ($s_t$) of the mobile agents ($s_t$);
S300) passing the current state ($s_t$) of the mobile agents through a prediction model (SE,PM) taking into account the current shared context (M,C), thereby obtaining successive encoded intermediate values (es1-es7), and calculating said future state ($s_{t+1}$) based of the last intermediate value (es7).
Step S300 comprises:
S360) determining predicted destinations (PLj) for at least part of the mobile agents (MAi); and
at step S300, an encoded value used to calculate at least said future state ($s_{t+1}$) is calculated based on the predicted destinations (g).

FIG.3

**Description**

BACKGROUND OF THE INVENTION

Field of the invention

The invention relates to methods and systems for predicting

Description of Related Art

Many systems or machines are exploited in environments where one or more mobile agents are present. Herein, a 'mobile agent' means any entity which is capable of moving from one place to another. For instance, the machine can be a machine operated on a road, in an urban environment. It can be for instance a car. In that case, the mobile agents can be typically vehicles, bicycles, or pedestrians.

When a machine is exploited in an environment in which mobile agents are present, and moving, in many cases the behaviour of the machine (its actions) has to take into account the behaviour, in particular the position, of the mobile agents present in the vicinity of the machine.

Moreover, in most cases, in order to optimize the way the machine is controlled or operated, it is not only necessary to know the position, of the mobile agents at the current time point, but it is also highly useful to have some understanding on the behaviour (e.g. the motion) of these agents in the near future.

Accordingly, there is a need for methods which make it possible to predict the future positions of mobile agents in a scene, at one or more future time steps.

Many such methods have already been proposed, in for instance some of the reference documents listed below.

However, in many cases these methods are not based models trained on real world data and consequently, fail to predict the behaviour of agents of the real world in a realistic manner. In particular, many of these methods fail to correctly capture the interactions between the mobile agents, although these interactions are often key to explain, and therefore to predict, the behaviour of these mobile agents.

References:

[1] J. Gao, C. Sun, H. Zhao, Y. Shen, D. Anguelov, C. Li, and C. Schmid. Vectomet: Encoding hd maps and agent dynamics from vectorized representation. In CVPR, 2020.

[2] D. Ha and J. Schmidhuber. Recurrent world models facilitate policy evolution. In Advances in Neural Information Processing Systems (NeurIPS), 2018.

[3] J. Ngiam, B. Caine, V. Vasudevan, Z. Zhang, H.-T. L. Chiang, J. Ling, R. Roelofs, A. Bewley, C. Liu, A. Venugopal, D. Weiss, B. Sapp, Z. Chen, and J. Shlens. Scene Transformer: A unified architecture for predicting multiple agent trajectories. In International Conference on Learning Representations (ICLR), 2022.

[4] S. Suo, S. Regalado, S. Casas, and R. Urtasun. TrafficSim: Learning to simulate realistic multi-agent behaviors. In IEEE Conference on Computer Vision and Pattern Recognition (CVPR), 2021.

[5] M. Zhou, J. Luo, J. Villela, Y. Yang, D. Rusu, J. Miao, W. Zhang, M. Alban, I. Fadakar, and Z. Chen. SMARTS: Scalable multi-agent reinforcement learning training school for autonomous driving. In Conference on Robot Learning (CoRL), 2020.

[6] S. Ettinger, S. Cheng, B. Caine, C. Liu, H. Zhao, S. Pradhan, Y. Chai, B. Sapp, C. Qi, and Y. Zhou. Large Scale Interactive Motion Forecasting for Autonomous Driving: The Waymo Open Motion Dataset. In ICCV, 2021.

[7] Salzmann, T., Ivanovic, B., Chakravarty, P., & Pavone, M. Trajectron++: Dynamically-feasible trajectory forecasting with heterogeneous data. In ECCV 2020 (pp. 683-700). Springer, Cham.

[8] VASWANI, Ashish, SHAZEER, Noam, PARMAR, Niki, et al. Attention is all you need. Advances in neural information processing systems, 2017, vol. 30.

SUMMARY OF THE INVENTION

In view of the above considerations, a first purpose of the present disclosure is to propose methods or systems for predicting future states of mobile agents at one or more future time step, the future states being predicted more accurately than with the existing methods and systems.

In this purpose, the following computer-implemented method for predicting at least a future state at a future time step of at least a part of a plurality of real or virtual mobile agents present in a scene is proposed. In this method, the mobile agents are in a real or virtual scene; the state of said mobile agents comprises, for each of said mobile agents, at least a pose and an attribute of the agent; the pose of an agent includes at least a 2D position of the agent and an angle indicating the orientation of the agent. In addition, the attribute is a datum which includes no positional variable and no orientation angle.

The method comprises performing the following steps:

S100) obtaining a current shared context, the current shared context being data comprising at least a map descriptive of stationary elements of the scene;
S200) obtaining at least a current state of the mobile agents at a current time step;
S300) passing the current state of the mobile agents at a present time step through a machine-learned prediction model taking into account at least the current shared context, thereby obtaining successive encoded intermediate values, and calculating at least said future state based on of the intermediate value obtained last;
wherein step S300 comprises a sub-step S360 of:

S360) determining predicted destinations at a predetermined time horizon in the future for at least part of (preferably all) the mobile agents, using a machine-learned model; and

adapting one of the successive intermediate value, based on the destination, to obtain a next one of the intermediate values.

The destination is a datum which indicates, at a predetermined time horizon in the future, one or more positions which are predicted to be reached by the considered mobile agent.

In some embodiments, determining the predicted destinations is performed by performing a multi-class classification task. The different classes then correspond to the different destinations which can be envisaged for the mobile agents.

Since the above-defined method takes into account a destination of at least part of the mobile agents, the method makes it possible to predict the future behaviour of the mobile agents in a fairly accurate, realistic way.

The method proposed above can be implemented in various contexts.

The mobile agents can be real agents moving in the real world. In this case, the methods can be used to predict the future behaviour of these agents. This prediction can help the operator of a machine, for instance of a vehicle, to operate the machine (for instance: to drive the vehicle). In this case the prediction is performed, in most cases, in real time. The operator of the machine can be a human (or several human beings), or can be an electronic operator, an e-operator, that is, a computer in charge of controlling or operating the machine. For instance, in the case of an autonomous driving vehicle, the e-operator can be the autonomous driving system tasked to drive (to control) the vehicle.

Consequently, a main use case of the methods disclosed herein is simulation.

In this case, the state of the mobile agents as calculated in the method may reproduce the state of the mobile agents in the real world.

The method may also be used to simulate virtual (or real) mobile agents in a virtual (or real) environment. For instance, the methods can be used to simulate realistic behaviours of real mobile agents in various situations, and in particular in the case of unusual (cornercase) situations rarely observed in the real world.

Consequently, in the case where a human being has to learn how to operate a machine, or in the case where an e-operator is a machine-learning-based model which has to learn how to operate the machine, predictions obtained with the methods disclosed herein can be used in a simulator to train the operator or the e-operator to operate the machine.

The methods used herein are in most cases used iteratively. That is, at each time step in a series of successive time steps, the prediction method is executed to predict a future state of the mobile agents. Depending on the implementation, at each time step the prediction may be either limited to only the next time step (t+1), or a plurality of time steps in the future (for instance from time point t+1 to time point t+Tf, where Tf is a time horizon in the future).

Depending on the implementation or use case, the methods used herein can be implemented either alone (the future state of all the mobile agents in a considered scene is predicted following the method), or in combination with one or more other methods for predicting the future state of mobile agents. In that latter case, part of the current state of the mobile agents obtained at step S200 may be data predicted by said other method(s) for predicting the future state of mobile agents.

For instance, in some applications where the methods disclosed herein are used to train an e-operator to operate a machine, the methods disclosed herein are used to predict the behaviour of some of the mobile agents; in addition, the future state of another part of the mobile agents is calculated either based on a scripted scenario (so that the behaviour of the mobile agent correspond to a selected script), or the future state of said another part of the mobile agent simply reproduces a previous behaviours (that is, states) of the mobile agents, which has been recorded.

The prediction method may be implemented to predict the future state of one or more of the mobile agents.

In an important application for instance, which is the control of a machine operated in a scene where mobile agents are present, the method can be implemented to predict the future state of all the mobile agents, except that of the controlled machine itself.

In the present document, the following notations and definitions are used.

'$\in$' is the mathematical symbol meaning 'belongs to'.

A 'head' is a functional unit of a machine-learned model.

A 'map' is any datum descriptive of stationary elements of a scene.

A 'mobile agent' is any entity capable of moving (changing position) relative to the scene of which that entity is part.

The word 'term', even in the singular form, may refer to a sum of a plurality of terms.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

A 'low-dimensional feature' means a feature comprising not more than 32 individual values (each individual value being for instance as a real number, an integer, etc.).

In the present document, a 'transformer' refers to a neural network comprising at least the encoder layers of a 'Transformer' as defined in Ref.[8].

Spatial information of an agent, called here the pose of the agent, includes at least a 2D position of the agent, and an angle indicating the orientation of the agent. The spatial information may further include a 3D- pose of the agent, and/or angular information about the agent, for instance the heading of a vehicle.

A 'computer' means any calculation system. A computer usually comprises one or more processors, and a memory capable of storing data. A computer can be a distributed calculation system, distributed over a plurality of processors, possibly physically arranged on different locations (including remote locations, using wireless connections).

A base encoder is as a model configured to input, for each agent among a plurality of mobile agents, the pose and the attribute of the agent, to process the poses of the agents via a positional encoder, and not to process the attributes of the agents via a positional encoder. Usually, the attributes of the agents are processed by a head comprising a multi-layer perceptron (MLP).

The prediction step S300 can be implemented in many different manners.

In some embodiments, step S300 comprises a sub-step S310 of:

> S310) based on the current state of the mobile agents at the current time step, calculating a first intermediate value of the mobile agents using a state encoder comprising a base encoder; and
> at step S300, said future state is calculated based on said first intermediate value.

In a variant of these embodiments, step 300 comprises a sub-step S320 of:

> S320) based on the map, calculating an encoded map with a machine-learned model comprising a base encoder; and adapting one of the successive intermediate value, based on the encoded map, using a dot-product attention, to obtain a next one of the intermediate values.

In this case, the query preferably is the first intermediate state, the key is the encoded map, and the output is said next one of the intermediate values.

In some embodiments, step 300 comprises a sub-step S370 of:

> S370) calculating a personality for at least part of (preferably all) the mobile agents with a machine-learned model, the personality unit; the personality being a low-dimensional feature;
> adapting one of the successive intermediate value, based on the personality, to obtain a next one of the intermediate values. In a preferred embodiment, the personality is calculated by sampling a distribution representative of the personality of the considered mobile agent or of a group (e.g., a type) of considered mobile agents. The personality is a low-dimensional feature intended to be descriptive of a type of motion of the considered mobile agent.

In some embodiments in which a state encoder is used, the personality unit is configured to input data representative of the map and of the traffic-lights data (ec), and the first intermediate value.

The personality unit may comprise dot-product attention mechanisms to incorporate the information contained in the inputted data to calculate the personality.

For instance, in some embodiments at step S370, the personality is calculated using three dot-product attention mechanisms to take into account respectively the encoded map, the encoded traffic-lights data and the interactions between mobile agents.

In some embodiments, the personality unit is a conditional variational auto-encoder, or CVAE. Advantageously, a CVAE compresses the information to obtain a very low dimensional feature, which will capture the essential information.

In some embodiments, the current shared context further comprises traffic lights data; the traffic lights data being data representative of a current state of traffic lights present in the scene.

In some embodiments, step S300 comprises a sub-step S330 of:

S330) based on current traffic lights data, calculating encoded traffic lights data with a machine-learned encoder comprising a base encoder; and

adapting one of the successive intermediate value, based on the encoded traffic lights data, using dot-product attention, to calculate a next one of the intermediate values.

In a preferred embodiment, in the dot-product attention mechanism the key is the encoded traffic lights data; the query is one of the intermediate values, and the output is a next one of the intermediate values.

In some embodiments, step S300 comprises a sub-step S340 of:
S340) adapting one of the successive intermediate value using a machine-learned model, the Interaction Transformer, configured to implement a self-attention mechanism for which the key, the value and the output are the same, to calculate a next one of the intermediate values.

In some embodiments, step S300 comprises a sub-step S350 of:
S350) adapting one of the successive intermediate values, based on the encoded traffic lights data, using a machine-learned model, the Temporal Unit, which comprises a recurrent unit for each of the mobile agents, to calculate a next one of the intermediate values.

In some embodiments, step S300 comprises a sub-steps S370 and S380 of: S370) passing a last obtained value of the intermediate values through at least one action unit (AU), the at least one action unit being configured to output, for each mobile agent, a datum representative of a derivative value of the state of the agent; and S380) calculating the future state by integrating said data representative of the derivative values, for the mobile agents.

A second purpose of the present disclosure is to propose a simulation method for simulating traffic, which exhibits improved performance to simulate traffic, in particular when a plurality of mobile agents are present in the scene. Accordingly, the following simulation method is proposed. This method comprises iteratively calculating future states of mobile agents present in as scene, the future states being calculated using any one of the prediction method presented above.

A third purpose of the present disclosure is to propose a control method for a machine, which exhibits improved performance to control the machine, in particular for a machine operated in a scene in which a plurality of mobile agents are present (which may or might interact with the machine). Accordingly, the following control method is proposed. This method comprises iteratively calculating controls to control the machine over successive iterations; wherein in at least part of the iterations, the controls are calculated based on a future state of mobile agents present around the machine; the future state of the mobile agents being predicted using any one of the prediction methods presented above.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the methods proposed herein, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the above-defined one or more computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a computer-implemented system comprising one or more processors and the above-defined computer-readable medium.

The methods according to the present disclosure can for instance be implemented in a machine, for instance a vehicle or a robot, comprising the above-defined computer-implemented prediction system.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig.1 is a schematic view in perspective of a vehicle moving on a road, and on which a prediction system according to the present disclosure is mounted;
- Fig.2 is a schematic top view of a crossroad on which the vehicle shown on Fig.1 is arriving;
- Fig.3 is a block diagram representing the main functional units of an autonomous driving system comprising a prediction system according to the present disclosure;
- Fig.4 is a block diagram representing the main functional units of the map encoder of a prediction system according to the present disclosure;
- Fig.5 is a block diagram representing the main functional units of the personality encoder of a prediction system according to the present disclosure;
- Fig.6 is a block diagram representing the main functional units of a transformer of a prediction system according to the present disclosure; and
- Fig.7 is a block diagram representing the main functional units of the personality or destination combination unit of a prediction system according to the present disclosure.

## DETAILED DESCRIPTION OF EMBODIMENTS

Embodiments of methods and systems according to the present disclosure will now be presented.

The methods disclosed herein will be presented below in the case of mobile agents moving on a road, for instance at a crossroad of a city. It should be understood that the present disclosure can be applied to systems deployed in many types of environments, for instance in an off-road (e.g inside a factory), aerial, or marine environment. The prediction systems can mounted in manned or unmanned, stationary or mobile machines, such as for instance mobile robots. In all the case listed here, the mobile objects and the environment in which they move can be real or virtual.

The state of the mobile agents at a current time point (or time step) t is noted $s_t$.

Depending on the use case, the prediction systems disclosed herein may be used either alone or in combination with other systems in order to obtain a predicted state $s_{t+1}$, at a future time point t+1, of part of, or preferably all, the mobile agents MAi in a considered scene at a future time step.

Indeed, the individual per-agent state $s_{t+1,i}$ for a mobile agent i at time t+1 may be either predicted by prediction methods according to the present disclosure (which will be presented in detail below), or by any other suitable prediction methods or models.

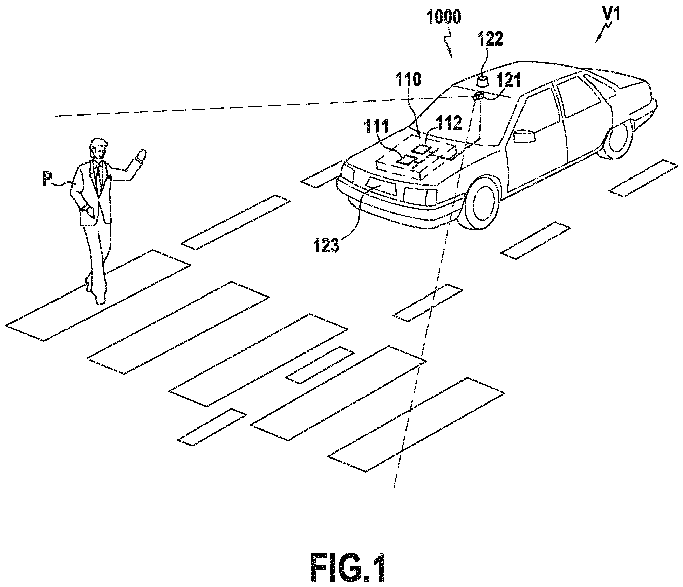

The prediction methods disclosed herein will mainly be presented in the case of a prediction system 200 which is part of an autonomous driving system 1000 which is part of an autonomous vehicle V1 shown on Fig.1.

In that embodiment, at each time step, the prediction model 200 outputs a prediction for all the mobile agents surrounding vehicle V1, except for the 'ego vehicle', that is, the vehicle V1. The prediction is outputted for Tf future time steps in the future (that is, from time t+1 to time t+Tf). On the basis of these predictions, the autonomous driving system 1000 safely and smoothly controls vehicle V1, by efficiently taking into account the behaviour of the different mobile agents present around vehicle V1.

## MATERIAL ARCHITECTURE

The methods of the present disclosure are implemented on one or more computers. They may for instance be implemented on a cluster of remote computers ( "in the cloud") to perform simulations.

In the embodiment presented herein, a prediction system 200 according to the present disclosure is mounted in vehicle V1 (as an example of a controlled machine).

On Fig.1, vehicle V1 is represented on a road, in front of a pedestrian crossing on which a first pedestrian P is about to cross the road.

Vehicle V1 includes the automated driving system 1000. The automated driving system 1000 ('system 1000') can be an advanced driving assistance system (ADAS), or a fully autonomous driving system capable of handling alone all driving tasks, at least in certain operational design domains.

System 1000 comprises a central driving computer 110, a set of sensors 120, each sensor being connected to computer 110, and various other components.

Most components of system 1000 are shared components, which are used to perform multiple tasks. That is, the components of the vehicle driving system 1000 perform the functions of system 1000, but may also perform other functions in vehicle 1. System 1000 includes in particular a perception unit 100, a mobile agents future state prediction system 200 ('system 200') according to the present disclosure, which is implemented by the central driving computer 110 ('computer 110'), and a control unit 300.

Although computer 110 is represented on Fig.1 in a single box, it may comprise one or more processors, and can therefore be a distributed calculation system, distributed over a plurality of processors, possibly physically arranged on different locations (including remote locations, using wireless connections).

The set of sensors comprises in particular sensors configured to perceive an external environment of vehicle 10. In this purpose, it comprises several cameras 121. Only one of these cameras 121, the front camera, is represented on Fig.1. Cameras 121 are configured to acquire images of the environment of vehicle 10, on 360° around it, at successive time steps.

The set of sensors further comprises one or more lidars 122 and one or more radars 123.

The functions (the functional units) of system 1000 are implemented on the computer 110.

Computer 110 comprises a non-transitory storage medium 111 and one or more processor(s) 112.

The computer 110, in particular in its storage medium 111, stores instructions which when executed by the one or more processor(s) 112 cause the one or more processor(s) 112 to implement the different functional units or functions of system 1000.

The one or more processors 112 are intended to be representative of the presence of any one or more processors or processing devices, of any of a variety of forms.

Computer programs to perform various driver assistance tasks and/or driving tasks are stored in storage medium 111. These programs include in particular a prediction program to calculate a future state of mobile agents surrounding vehicle V1, a simulation program to simulate traffic in the district where vehicle V1 is located, and a control program to drive vehicle V1, according to the present disclosure, all of which are stored in storage medium 111. These programs, and the storage medium 111, are examples respectively of computer programs and a computer-readable recording medium pursuant to the present disclosure. The storage medium 111 indeed constitutes a recording medium according to the invention, readable by the one or more processor(s) 112 and on which said programs are recorded.

FUNCTIONAL ARCHITECTURE

The architecture of a system according to the present disclosure will now be presented in relation with the concrete embodiment illustrated by Figs.1to 7.

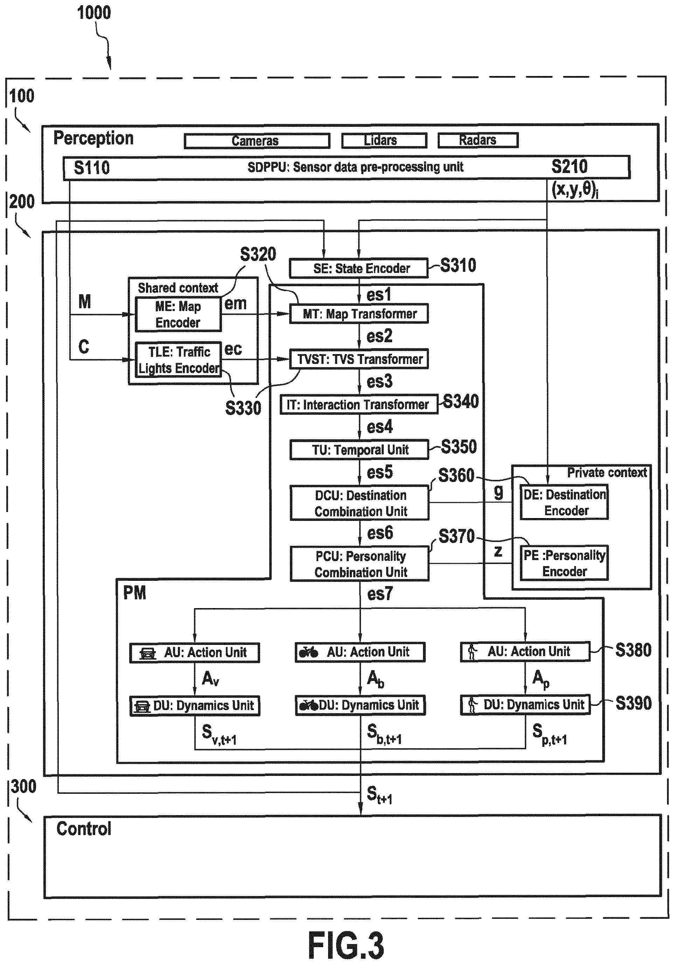

The core function of the proposed system 200 is to predict a future state of mobile agents MAi present in the environment of vehicle V1 ('the scene'). An exemplary scene, in the case of prediction system 200, is the crossroad shown on Fig.3.

At the current instant shown on Fig.3, several vehicles V1-V3 and V5-V7 are about to cross the crossroad, while a vehicle V3 has just crossed the crossroad.

The traffic through the crossroad is regulated by four traffic lights C1-C4, representing time-varying signals.

In addition, at the considered time step (current time step t), the first pedestrian cited above is about to cross the road in front of vehicle V1 (Fig.1); in addition, two other pedestrians P are crossing the road close to vehicle V1.

Data Representation

Mobile agents data

The pedestrians and the different vehicles present in the scene constitute the mobile agents MAi whose motion over time can be predicted by system 200. The number of mobile agents MAi is noted $N_A$.

In this embodiment which concerns urban driving, typically three types of mobile agents may be present: vehicles, bicycles and pedestrians. As it will be explained below, system 200 uses the type of the mobile agents as an input in order to predict more precisely the future state of the agents.

The state $s_t$ of the mobile agents at a current time step t is a datum comprising for each of the mobile agents, at least a pose $(x,y,\theta)$ and an attribute u of the agent. The angle $\theta$ is the yaw angle of the vehicle.

The attribute u includes the 3-dimensional size (length, width, height) of the agent and the type (vehicle, bicycle, pedestrian) of the agent. This scene-centric, vectorized representation ensures the memory and computational efficiency of the implementation.

The state $s_t$ is the combination of the individual per-agent states $s^i_t$ of the respective mobile agents MAi at time t. Each per-agent state $s^i_t$ describes the situation of a mobile agent MAi in the scene. Each state $s_t$ can for instance be represented as a tensor element $[N_A,7]$ (7 for $x,y,\theta,u$), for the considered time step.

The map

In system 200, the scene represented by Fig.3 is mainly represented by a map M constituted of polylines PL and by traffic light data C.

Each of the polylines PL represents a typical trajectory that a vehicle can follow when crossing the crossroad;

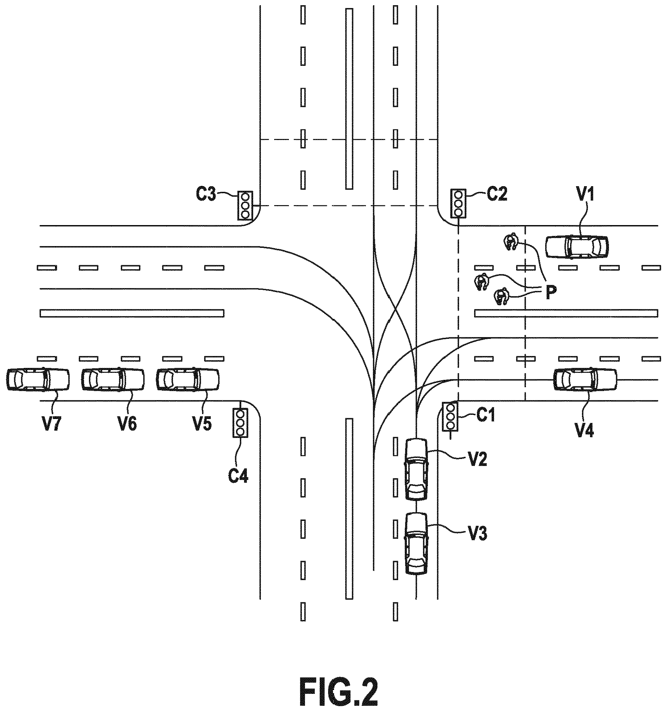

that is, it joins a source lane on the origin road on which the vehicle is moving before entering the crossroad, to a lane on the destination road where the vehicle intends to go after the crossroad (Only a part of the polylines are represented on Fig.2).

A polyline node or a traffic light is represented by $(x, y, \theta, u)$ where $x, y$ are the position coordinates of the node, $\theta$ is the yaw angle of the line segment of the polyline pointing to the next node of the polyline, and $u$ is an integer indicating either that the datum is a polyline, or the state (green, orange or red) in the case of a traffic light datum.

Traffic lights data

In the methods disclosed here, the traffic light data C which represent the state of traffic lights (for instance, traffic lights C1-C4 on Fig.2), as part of the shared context, can be obtained by the prediction system 200 to improve the precision of its predictions.

The traffic light data can be obtained by different manners.

These data can be recorded data (replayed for simulation or inference). Otherwise, the traffic-lights data can be generated, either following a script defined by a user of the system, or by a model, for instance a machine-learned model.

Overall architecture

The automated driving system 1000, showing in particular the architecture of the prediction system 200 is presented by Fig.3.

System 200 comprises five encoding units to encode the context of the scene:

- a State Encoder ES;
- a Map Encoder ME and a Traffic Lights Encoder TVSE, to encode the shared context of the scene, that is, the context common to all the mobile agents;
- a Destination Encoder DE and a Personality Encoder PE, to encode the private context (destination and personality) of the respective mobile agents MAi.

System 200 further comprises a prediction model PM.

In order to provide up-to-date information to the prediction system 200, in addition to the set of sensors 120, the perception unit 100 of autonomous driving system 1000 comprises a Sensor Data Pre-Processing Unit SDPPU.

At each time step, the SDPPU acquires the data outputted by the sensors of the set of sensors 120, and transmits up-to-date scene data to some of the context encoders, that is, to the Traffic-Lights Encoder TLE and the destination encoder DE, and to the state encoder SE of system 200.

Based on the data received at each time step by the SDPPU, system 200 iteratively predicts future states for the mobile agents by performing, at each iteration (or at each time step), a step S100 to obtain the current shared context, a step S200 to obtain the private context, and a step S300 for predicting the future state for the next time step.

During the prediction step S300, based on the current shared context (em,evs) and on the current state $s_t$ of the mobile agents at the present time step (t=0), the destination and (optionally) the personality, the prediction model PM progressively adapts the value es of the current state to obtain successive intermediate values, or encoded states (es0...es8) so as to finally output the future state $s_{t+1}$ of the mobile agents MAi at the next time step.

In the present embodiment, the prediction model PM not only predicts the state $s_{t+1}$ of the mobile agents for time t+1, but actually for a whole time period (that is, for a plurality of time steps) in the future $s_{t+1} .... s_{t+Tf}$, until a time horizon Tf in the future.

The predicted future states $s_{t+1} .... s_{t+Tf}$ are transmitted to the control unit 300 of the autonomous driving 1000, to enable control unit 300 to control (drive) vehicle V1.

The Encoders

In order to implement the prediction step S300, shared and private context information and the current state $s_t$ of the mobile agents MAi have to be transmitted to the prediction model PM.

In some embodiments, the shared and private context information and the current state $s_t$ of the mobile agents MAi are directly processed by the prediction model PM. However, in the present embodiment, encoders are used to pre-process these data in order to transmit more readily exploitable data to the prediction model.

The encoded data outputted by these encoders are then supplied to the prediction model PM.

The shared context encoders (ME, TVSE) and the state encoder SE

Most preferably, the spatial or positional information included in the shared context of the mobile agents (i.e. in the present embodiment, in the map M and the traffic lights data C) as well as the in agent state $s_t$ are represented in global coordinates.

The state encoder SE comprises a base encoder. This base encoder mainly comprises a first positional encoder configured to input the 2D-positions of the agents, a second positional encoder configured to input the orientations $\theta$ of the agents, and an MLP configured to process the attribute of the agents. The outputs of these three sub-units are then concatenated to yield the first intermediate value es 1.

The state encoder SE accordingly inputs the current state $s_t$ of the mobile agents MAi at the current time step, and on this basis, calculates the first intermediate value, which can be seen as a first encoded state es 1.

The information relative to the shared context is then incorporated to the agent state, or rather, to the first intermediate value es1, via a dot-product attention mechanism.

Now, to ensure that the information relative to the shared context is correctly taken into account in the encoded state es (or to the first intermediate value es1), positional encoding (PosE) is preferably used. This approach, also used by Ref.[3], is computationally more efficient than other methods which, for each mobile agent, transform the global information to the local coordinates of agent.

Indeed, it has appeared that in some cases, the dot-product attention mechanism alone may not be capable of transforming the coordinates from global coordinates to local coordinates. Indeed, while the shared context is expressed in global coordinates, the behaviour of a considered mobile agent, its personality, its destination, may be best handled in local coordinates, that is, coordinates attached to the agent itself. However, the information transfer mechanism alone may not be capable of performing a global to local coordinate transform.

To remedy this issue, positional encoders (PosE) may be used. A positional encoder is an encoder in which positional information (for instance $(x,y,\theta)_i$ for a mobile agent Ma$_i$) is the only variable considered.

For this reason, in the embodiment presented herein, the shared context encoders (the map encoder ME and the traffic-lights encoder TLE) as well as the state encoder SE use positional encoders to encode positional information.

In known methods, a positional encoder has been used to obtain positions; these positions are concatenated with the direction vector and other attributes u, and the concatenated datum is then fed to a Multi-Layer Perceptron, that is, an MLP.

In the present embodiment, the state encoder SE is defined by the following equation:

$$s = cat(PosE(x), PosE(y), AE(\theta), MLP(u))$$

where, $AE_{2i}(\theta) = \sin(\theta \cdot i)$, $AE_{2i+1}(\theta) = \cos(\theta \cdot i)$, $i \in [1, \ldots, d_{emb}/2 + 1]$, 'cat' represents the concatenation function, 'MLP' represents a Multi-Layer Perceptron, and 'AE' stands for angular encoding, a special case of sinusoidal PosE which is used to encode the angle $\theta$ representing the motion direction of the considered mobile agent.

Compared to PosE that has to use a small frequency to avoid overloading the $2\pi$ period, AE can use integer frequency because it encodes an angle. Moreover, the addition is replaced by concatenation because other states, e.g. velocity, are highly correlated to the pose encoded by PosE and AE.

Thanks to the angular encoding, the state encoder advantageously has an improved capacity to process positional or directional information of the respective mobile agents.

In a preferred embodiment, the traffic-lights encoder TLE is configured for instance as a base encoder.

The traffic-lights encoder TLE is configured to perform the same function as the state encoder SE, as defined by the above equation, and may for instance have an architecture similar to the state encoder SE, in order to encode the traffic lights data. The Map Encoder ME

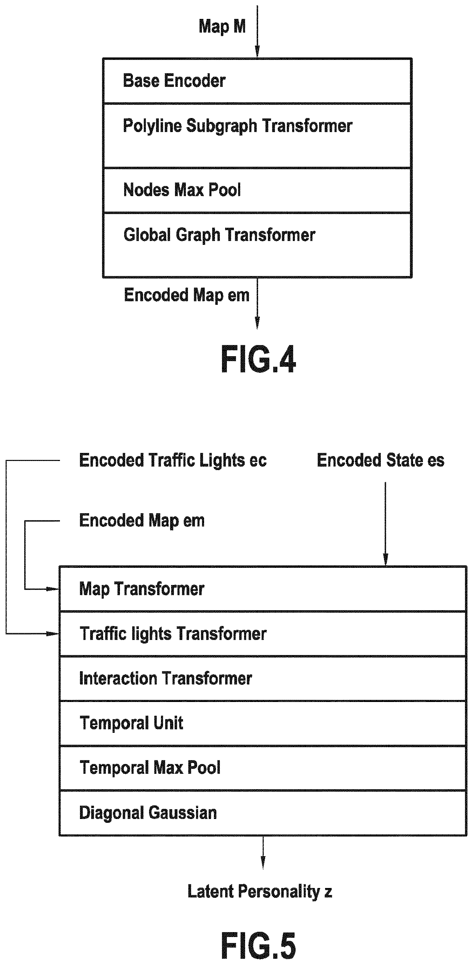

The architecture of the map encoder ME used in the present embodiment is shown on Fig.4. and is derived from references [1] and [3].

The Map Encoder ME comprises the following blocks, from upstream to downstream: a base encoder, a polyline subgraph transformer, a Nodes Max Pooling block, and a Global Graph Transformer. This architecture is based on an architecture described by Ref.[1]. The polyline subgraph transformer may be implemented as a transformer, but may only comprise part of this architecture, as noted in Ref.[1].

The input of the Map Encoder ME is the map M and the output in an encoded map *em.* Both are tensors with $[N_M, N_{node}, f]$ coordinates, where $N_M$ is the number of polylines in the map, $N_{node}$ is the number of nodes in the polylines (the same in all polylines), f is the dimension of the node of a polyline (for instance 5 if the node is (x, y, z, $\theta$, u) with u including only the type of the agent).

The Private Context Encoders

The Personality Encoder PE

In order to address the uncertainties not explained by the destination and to learn diverse behaviors of the different mobile agents, e.g., the human drivers, pedestrians and cyclists, a latent personality is used to represent the personality of the mobile agents.

In order to capture relevant information describing the personality of the mobile agents, the personality is specifically designed as a low-dimensional feature (not more than 32 features).

For instance, a Diagonal Gaussian of dimension 16 is used to output the personality, in the present embodiment. Consequently, the Personality Encoder PE predicts the mean of a 16-dimensional diagonal Gaussian for each type of mobile agents. The standard deviation is a learnable parameter independent of any inputs.

The standard deviation parameter is shared by agents from the same type (vehicle, pedestrian, cyclist).

In order to compress the information and efficiently extract the relevant information, a Conditional Variational Auto-Encoder, a CVAE is used to determine the personalities of the agents.

Accordingly, the personality of each mobile agent MAi is modelled as the latent variable of a CVAE, which is used to address the multi-modality of the future.

The architecture of the Personality Encoder PE is shown on Fig.4.

From upstream to downstream, the Personality Encoder PE comprises a Map Transformer, a Traffic-Lights Transformer, an Interaction Transformer, a Temporal Unit, a Temporal Max Pooling Unit, and a Diagonal Gaussian Unit GU. The latent personality z is outputted by the Gaussian Unit GU.

Accordingly, the architecture of the Personality Encoder is very similar to that of the Prediction Model PM and accordingly, unless otherwise, the features or sub-units of the Prediction Model can also be used to implement the Personality Encoder.

The inputs of the Personality Encoder are the encoded map em and the first intermediate value es1 (or 'first encoded state'), inputted by the Map transformer.

The output of the Map transformer and the encoded traffic light data ec are then inputted by the Traffic-Lights Transformer.

The output of the Traffic Lights Transformer is then passed successively through the Interaction Transformer, the Temporal Unit, the Temporal Max Pooling Unit, the Diagonal Gaussian Unit.

In the present embodiment, two Personality Encoders (the prior Personality Encoder and the posterior Personality Encoder) are trained, with the same architecture, to learn the posterior and the prior personality respectively.

The Destination Encoder DE

The Destination Encoder may be implemented as a regular feed-forward neural network.

In previous systems, the destination was essentially associated with the last observed position(s) of the considered mobile agent. As a consequence, the ground truth goal assigned to the model in charge of defining the destination could not adequately reflect the intention of the considered agent. For instance, a vehicle stopped at red lights would be interpreted erroneously as having reached its final destination and not wanting to move ahead. Accordingly in such systems, the model in charge of destination prediction would learn a wrong causal relationship if conditioned on such a goal.

By contrast, in the methods proposed herein, this problem is solved by specifying the destination as a next goal to be reached once the current one is reached, instead of a current position.

In some embodiments for instance, an online navigator can be run for each agent to determine such destination.

In particular, for simulations with a short time horizon and small maps, it is sufficient to estimate one destination for the near future, and to switch to an unconditioned policy once that destination is reached.

Since the destination is not available as ground truth information in the usual motion prediction datasets, for training purposes, the desired destinations of the mobile agents noted $\hat{g}$ can be identified heuristically for the training dataset as a polyline PLi which is selected by extending the recorded agent trajectory based on the map topology.

The Destination Encoder DE can then be trained based on the approximated destinations $\hat{g}$.

In this case, as in the embodiment presented here, predicting the destination can be formulated as a multi-class classification task, where the logit $p_i^j$ for a polyline PLi and a mobile agent MAj is predicted by the destination encoder DE as:

$$p_i^j = MLP\left(em^i, GRU\left(s_{-Th:0}^j\right)\right)$$

where em[i] is the feature of the encoded map em representing the polyline PL$_i$, i ∈ {1, . . . , N$_M$ }, GRU is a gated recurrent unit, s[j]$_{-Th:0}$ is the states for agent MAj from time -Th to time t=0 (considered to be the current time point), and j ∈ {1, . . . , N$_A$ }.

Accordingly in this case, the destination of an agent depends only on the map M (via the encoded map em[i]) and its own encoded history states, that is, the per-agent states $s^j_{-Th:0}$ for the mobile agent Maj from time -T$_h$ to the current time step 0.

Based on these logits $p^j_i$ , the destinations of a mobile agent MAj are represented by a categorical distribution with N$_M$ classes and the probability is obtained via the softmax function:

$$P^j_i = \frac{\exp(p^j_i)}{\sum_i \exp(p^j_i)} \ \text{ with i } \in \ \{1, \ldots, N_M \}, j \in \{1, \ldots, N_A \}$$

After obtaining the polyline index i, the predicted destination g is the encoded polyline feature *em[i]* indexed by i. The polyline indices of the approximated destinations $\hat{g}$ used as ground truth are saved during the preparation of the training dataset.

For training and simulation the approximated destination $\hat{g}$ can be used; conversely for motion prediction (during inference) the destination g is predicted using the destination encoder DE.

The prediction model PM

The transformers

The prediction model PM comprises upstream three transformer units which have similar architectures: The Map Transformer MT, the Traffic Lights Transformer TLT and the Interaction Transformer IT.

The Map Transformer MT and the Traffic Lights Transformer TLT both include cross-attention mechanisms which are used to update the intermediate values es1, then es2 ( as explained below) by attending respectively to the map M via the encoded map em, and to the state C of the traffic lights via the encoded traffic lights data ec.

The Map Transformer MT, the Traffic Lights Transformer TLT and the Interaction Transformer IT can for instance be implemented based the transformers proposed by Ref.[3].

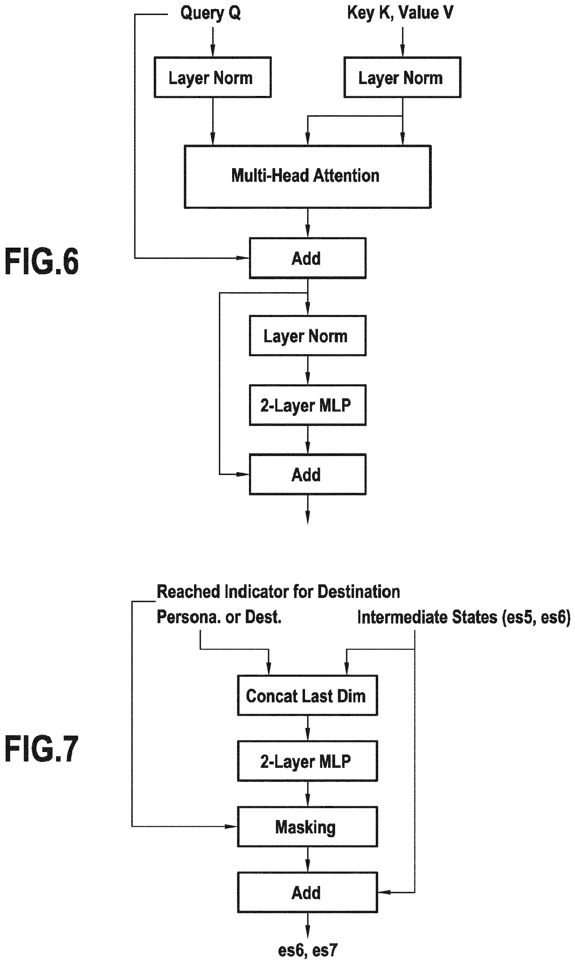

The architecture of these transformers MT, TLT and IT is shown in Fig.6 in which :

- Layer norm' designates a normalization layer;
- MLP designates a multi-layer perceptron (in the present case, a two-layer perceptron); and
- The Multi-head attention refers to the Multi-head attention head proposed by Ref.[8].
- 'Add' designates a point-wise addition (summation) operation.

If the query, key and value share the same tensor, then the cross-attention boils down to the self-attention which is used by the Interaction Transformer IT.

The Interaction Transformer is a block whose function is to take into account the interactions between the mobile agents. In this purpose, The Interaction Transformer IT uses self-attention across the agent dimension to allow the mobile agents to attend to each other.

The Temporal Unit TU

The temporal unit can be implemented by any unit capable of keeping a memory of past values of the state s. The temporal unit can comprise for instance Gated Recurrent Units (GRU), LSTM units, etc. In the temporal unit, in some embodiments a recurrent unit is provided for each considered mobile agent MAi. For instance, the Temporal Unit may comprise a layer of Long-Short-Term-Memory (LSTM) neurons, with one neuron for each mobile agent.

The parameters of the temporal unit TU are shared by all the individual recurrent units allocated to the respective mobile agents.

An example of a temporal unit which can be used to implement the methods presented herein is disclosed by Ref.[2].

The destination and personality combination units DCU, PCU

In the present embodiment, the DCU and the PCU have the same architecture, shown on Fig.7.

A Reached Destination RD vector updated at each iteration of the method indicates, for all the mobile agents MAi, whether each of them has reached or not its calculated destination.

The DCU or PCU processes the input data as follows :

First, the personality or respectively destination combination unit combines (for instance, concatenates) the personality or respectively the destination with the intermediate value es5 or respectively es6 representing the encoded state.

The result then passes through a 2-layer MLP.

In the DCU (but not in the PCU), the output of the 2-layer MLP is submitted to a masking operation based on a mask based on the Reached Destination vector RD. The purpose of the masking operation is to control if the state prediction should be conditioned on the destination or not. If an agent reached its destination, then the masking operation is performed so as to make sure the intermediate values obtained for the considered agent are not affected by the destination.

The output of the MLP is then concatenated to the initially inputted intermediate value, that is, to value es5 for the DCU, to es6 for the PCU.

Accordingly, the intermediate value es5 first passes through the Destination Combination Unit DCU, which yields the encoded state es6.

The intermediate value es6 then passes through the Destination Combination Unit DCU, which yields the final encoded value es7.

Action and Dynamics Units

In the present embodiment, in order to use selectively different sets of parameters for vehicles, cyclists and pedestrians, three actions units are used, as well as three dynamics units.

The action unit(s) is or are unit(s) configured to output, for each mobile agent, a datum representative of a derivative value of the state of the agent. This derivative value can be for instance an acceleration or braking of the mobile agent and a yaw rate of the agent.

Conversely, the dynamics unit(s) is or are unit(s) configured, based on the data representative of derivative values of the states of the agents, to calculate the future state of the agents. Accordingly, the operation performed by the dynamics unit is comparable to an integration.

As action unit, a two-layer MLP can be used to predict the acceleration and the yaw rate of each agent.

Three action units are instantiated with the same architecture, one for each type of agent (Vehicles, Bicycles, Pedestrians).

The dynamics units are implemented based on models of the agent (or the group of agents) that the dynamics unit has to represent.

In the present embodiment, each Dynamics Unit DU is modelled as a unicycle dynamics, with constraints on maximum yaw rate and acceleration for all types of agents.

An example of functional units which can be used to implement the Action Units and the Dynamics Units is provided by Ref.[7].

TRAINING

Training dataset

In order to train the machine-learned models used in the methods disclosed herein, a motion prediction dataset has to be prepared. This dataset comprises episodes. Each episode contains data showing actual motions of vehicles, pedestrians, and other mobile agents present in the scene, and recorded during a selected time period.

Accordingly, each episode of the motion prediction dataset includes a static map $M \in R^{N_M \times Nnode \times 4}$, traffic light data $C \in R^{T \times N_C \times 6}$, agent states (called 'ground truth agent states') $\hat{s} \in R^{T \times N_A \times 4}$ and agent attributes $u \in R^{N_A \times 4}$, where $N_M$ is the number of polylines, $N_{node}$ is the number of polyline nodes, $N_C$ is the number of traffic lights and $N_A$ is the number of mobile agents. Of course, the size of the data has to be adapted to the specific use case.

For each episode, the Th+1$^{th}$ time step of the episode (Th is an integer) is selected. To simplify, this time step which is set to t = 0 is supposed to be the current time step, Th is the number of time steps considered in the past, and Tf is the number of time steps considered in the future (Hence a complete episode has

T = Th +Tf +1 steps in total).

The ground truth state of a mobile agent i at step t is denoted by $\hat{s}_t^i = (x, y, \theta, v)$ where v is the speed of the mobile agent.

In addition, the heuristically approximated destinations $\hat{g}$ which have been identified for the respective mobile agents, as explained before, are stored in the training dataset.

Training operations

The machine-learned models of the prediction model 200 are trained by end-to-end learning based on the training dataset.

Training is performed based on complete episodes; by contrast during inference, the prediction model only receives historical information.

Back-propagation is used through time and reparameterization gradients for the training.

The personality encoder PE is trained as a CVAE. Consequently, the personalities of the agents (or possibly of groups of agents) are learnt by the Personality Encoder during simulation. Then during inference, the personalities of the mobile agents are considered fixed.

During training, for each episode of the training dataset, first the map M, the traffic lights C and the GT agent state s are encoded, which yields the encoded map em, the encoded traffic lights ec $_{-Th:Tf}$ (from time step -Th to Tf) and the encoded GT agent state es1$_{-Th:Tf}$.

Then the posterior personality $z_{post}$ is predicted using the posterior Personality Encoder PE, based on information for the past and future periodes covered by the episode, that is, for t ∈ [-Th , Tf].

Then the prior personality $z_{prior}$ is also predicted, using the prior personality encoder and information for the past time steps (t ∈ [-Th, 0]).

The prior personality is obtained from the prior Personality Encoder. The posterior personality is obtained from the posterior Personality Encoder. The Posteriori personality is used by the prediction model PM during the training, to allow the prediction model PM to reconstruct the future. To complete the reconstruction task, both the posterior personality encoder and the PM are trained together. The posterior personality encoder learns how to compress a complete episode into a low-dimensional personality. The prediction model PM learns how to use the low-dimensional personality to reconstruct the future. Then conversely the prior personality is trained to match the posterior during the training using KL-divergence loss.

Using only information from the past, prior personality tries to match the posterior personality. Prior personality is just trained, not used during training. Prior personality is used during the inference for motion prediction. Priori personality is not used during inference for simulation.

The logits $p_i^j$ of destinations are predicted using the encoded map M and the first encoded state es1$_{-Th:0}$ over the past period (from t=-Th to t=0). The softmax function is then applied to the logits $p_i^j$ to obtain a multi-class categorical distribution of the destination of each agent $P_{dest}^{1:N_A}$. The destination distribution has $N_M$ classes; one for each polyline PLj of the map.

Then, the prediction model PM is trained:
For the past time steps (i.e., t ∈ [-Th , 0]) the GT states $s_t$ (as recorded in the recorded episode) are used; whereas for each future time step (i.e., t ∈ [1, Tf ]), the predicted state $s_t$ predicted at the previous time step t-1 is used.

During this training, the approximated (ground truth) destinations states $\hat{g}$ and the posterior personality $z_{post}$ are used (More precisely, for the posterior personality $z_{post}$, a sample representative of the posterior personality $z_{post}$ is used). The predicted destination distribution g is therefore trained to match the GT destination $\hat{g}$. More precisely, the destination distribution predicts the value of an index associated with a polyline, rather than the polyline itself. The destination $\hat{g}$ is the encoded map polyline selected by this index. Similarly, the approximated (Ground Truth) destinations are saved as index. The index will be used later together with the map.

The personality remains fixed throughout the prediction horizon during training. i.e. the personality z is sampled before inference. Accordingly, during inference the prediction model PM uses the same sample at every time step.

At the same time, the prior $z_{prior}$ is trained to match the posterior $z_{post}$.

The predicted destinations g and the prior latent personality $z_{prior}$ will be used at the inference time if the task is a priori simulation, i.e. motion prediction, in which case only information relative to the past and present is available.

The CVAE compresses the complete episode into a 16-dimensional Gaussian posterior, then reconstructs the same episode from this posterior. During this procedure, the posterior is trained.

Then the prior is trained to match the posterior using KL-divergence.

Training the prior is performed for motion prediction, in which the posterior is not available (this would require the complete episode). For simulation the complete episode is available, for motion prediction only the history is available, but future state(s) have to be predicted. The prior could be trained in this purpose. However, advantageously, learning a posterior first and then training the prior to match the posterior gives improved performance, in particular since the latent feature makes it possible to learn a better representation.

At each iteration, the prediction model PM needs the state $s_t$ at the current time point to predict the state at the future time point(s).

For t in [-Th,0] the ground truth state $\hat{s}$ (that is, the state as recorded in the training dataset) is used as input. For t in [1,Tf] the state predicted by the prediction model PM at the previous iteration is used as input. It has been observed indeed that training the prediction model in this fashion improves its performance.

In other embodiments however, during training, at each iteration, the prediction model received as inputs its own prediction at a previous time step. That is, the prediction model PM is trained in an auto-regressive manner.

However, for motion prediction, since the GT states for the past time steps (t in [-Th,0]) are available, it is preferable to take these state values into account for the training, which improves the performance of the prediction model.

During this phase (time steps in the future), the loss function L includes three terms:

$$L = L_{rec} + L_{KL} + L_{CE}$$

where $L_{rec}$ is a reconstruction loss term with smoothed L1 distance for the states (x, y, θ, v), $L_{KL}$ is a KL-divergence loss term clipped between $z_{post}$ and $z_{prior}$, i.e. if the KL-loss is smaller than a certain value, then this loss will not be applied (set to zero). $L_{CE}$ is a cross-entropy loss for destination prediction.

The training is carried out with all relevant agents to enable the prediction model PM to be able to generate realistic behaviors for all mobile agents (for instance, for all traffic participants, be they vehicles, bicycles or pedestrians), not just for the interested ones heuristically marked by the dataset.

More information on how to implement such loss function can be found in Ref.[2].

INFERENCE

During inference, the method can be implemented in two different contexts: Motion prediction and simulation.

Motion Prediction

In the first case, motion prediction is formulated as an a priori simulation, a special case of the a posteriori simulation where the prediction model controls all agents, and the ground truth (known) information is only available for the past time (for t ∈ [-T h , 0]).

During inference, the prediction of the future state of the mobile agents is performed as follows.

Beforehand, at the current time step t, data are acquired by sensors 120 (cameras 121, lidars 122, radars 123). These data are possibly combined with other sources of information (e.g. vehicle-to-vehicle (V2V) information) and transmitted to the SDPPU.

At each time step, the following operations are carried out in order to predict a future state $s_{t+1}$ of the mobile agents MAi.

First, at step S100, a current shared context is obtained:

At step S110, if necessary, the SDPPU outputs the updated map M (this calculation is executed only once if the scene for which the predictions are made does not change over time, for instance in a crossroad simulator) and the updated state C of the traffic-lights. The updated map M (when necessary) and the updated state C are transmitted respectively to the Map Encoder ME and the Traffic Lights Encoder TLE.

At step S120, based on the updated state C of the traffic-lights, the Traffic Lights Encoder TLE outputs the encoded Traffic Lights data ec.

Then, at step S200, the state $s_t$ of the mobile agents at the current time step (0) is obtained.

In this purpose, at step S210 the SDPPU outputs the updated positional data (x,y,θ)i relative to part or all the mobile objects MAi, and transmits them to the Destination Encoder DE and to the state encoder SE.

If part of these data are not available from the SDPPU, previously predicted values of the state of the mobile agents for the current time step may be used.

Then, the prediction step S300 begins.

It should be noted that the encoding of the shared context and the private context by the encoders may be executed partly in parallel with (and during) some of the calculations executed by the prediction model PM (step S300), as long as the inputs to the prediction model are provided to it in due time.

At step S300, the state of the mobile agents at the next times steps is calculated by the prediction model PM as follows.

As an initial encoding operation (step S310), the State Encoder inputs the current value of the state and on this basis, calculates the first intermediate value es1.

Then, successive intermediate values, noted es1, es2,.... es8 will be calculated successively by the different sub-units of the Prediction Model.

At step S320, if necessary (if the up-to-date encoded map em is not already available), the Map Encoder outputs the encoded map em.

Based on the first intermediate value es1 and on the encoded map em, at step S320, the Map Transformer MT calculates a second intermediate value es2, which is transmitted to the Traffic-Lights Transformer TLT.

At step S330, first the Traffic-Lights Encoder TLE calculates the encoded traffic-ligths data ec.

Based on es2 and on the encoded traffic lights data ec, at step S330 the Traffic-Lights Transformer TLT calculates a third intermediate value es3, which is transmitted to the Interactions Transformer IT.

Based on es3, at step S340 the Interactions Transformer IT calculates a fourth intermediate value es4. This value is transmitted to the Temporal Unit TU.

Based on es4, at step S350 the Temporal Unit TU calculates a fifth intermediate value es5, which is transmitted to the Destination Combination Unit DCU.

In parallel, the Destination Encoder DE calculates (or has calculated) the predicted destination g, and transmits this data to the Destination Combination Unit DCU (step S360).

Based on es5 and on the destination calculated at step S360, the Destination Combination Unit DCU calculates a sixth intermediate value es6, which is transmitted to the Personality Combination Unit DCU.

In parallel, the Personality Encoder PE calculates (or has calculated) the predicted personality z, and transmits this personality to the Destination Combination Unit DCU (step S370).

During inference for motion prediction, the prior personality encoder will take into account the available data, that is, the data relative to the past and present time step, and on this basis will infer the (prior) personality distribution. Then, a sample will be generated from the distribution and will be fixed as the personality.

Similarly, during inference for simulation, the posterior personality encoder will look at the complete episode (that is, all the data from the past, the present and the future time steps) and on this basis, will infer the (posterior) personality distribution.

It should be noted that the personality prediction may be performed at each loop. However, preferably the personality may be performed more seldom. It may be performed for instance only during training; after that during inference, frozen (fixed) values of the personality may be used over the successive time steps considered.

Based on es6 and on the Personality z calculated at step S370, at step S370 the Personality Combination Unit DCU calculates a seventh intermediate value es7.

The seventh intermediate value es7 is transmitted in parallel to each of the Action Units (the Vehicle Action Unit, the Bicycle Action Unit and the Pedestrian Action Unit) corresponding to the different identified mobile agents types.

Based on es7, at step S380 each of the Action Units calculates, for each of the mobile agents of the type covered by the action unit, the future action for the considered agent. Consequently the respective action units output vectors Av, Ab, Ap which represent respectively the actions of the mobile agents MAi for the vehicles, for the bicycles, and for the pedestrians. Each of these vectors Av, Ab, Ap is then transmitted to the corresponding Dynamics Units DU.

Based on the respective vectors Av, Ab and Ap, at step S390 the Dynamics Units DU calculate the updated state $s^i_{v,t+1}$, $s^i_{b,t+1}$ and $s^i_{p,t+1}$ respectively for the vehicles, the bicycles and the pedestrians. These values are then combined to constitute the predicted value $s_{t+1}$ of the state of the mobile agents at the next time step.

The predicted state $s_{t+1}$ is then transmitted to the control module CM of the autonomous driving system 100.

Based on the predicted state $s_{t+1}$, the control module calculates the appropriate control for the vehicle at the next time step.


Simulation


When the prediction system 200 is implemented to perform simulation, the inference procedure is the same as the above procedure used for motion prediction, except that the posterior personality and the ground truth destination are used.

In the case of simulation, the current state used as a main input of the method is in most cases the predictions outputted at the previous iteration of the method.

Another minor difference is that for motion prediction the appearance of unseen agents is not predicted.

In addition, for simulation, since the information relative to future time steps is available, if at a future step some agents appear in the recorded episode, we will spawn it also in the simulation.

RESULTS

The methods and systems according to the present disclosure have been tested on the Waymo Open Motion Dataset (WOMD) (Ref.[6]), which advantageously comprises relatively long episodes, and further contains fairly diverse and complex driving scenarios, such as busy intersections with pedestrians and cyclists.

The various experiments carried out on the Waymo Open Motion Dataset have shown that the methods proposed herein make it possible to predict and simulate realistic multi-agent behaviors and to exhibit promising performances on the motion prediction task.

**Claims**

1. A computer-implemented prediction method for predicting at least a future state ($s_{t+1}$) at a future time step (t+1) of at least a part of a plurality of real or virtual mobile agents present in a scene, the state ($s_t$) of said mobile agents comprising, for each of said mobile agents, at least a pose and an attribute (u) of the agent, the pose of an agent including at least a 2D position of the agent and an angle ($\theta$) indicating the orientation of the agent, the attribute (u) including no positional variable (x,y) and no orientation angle ($\theta$);

   the method comprising performing the following steps:

   S100) obtaining a current shared context (M,C), the current shared context being data comprising at least a map (M) descriptive of stationary elements of the scene;
   S200) obtaining at least a current state ($s_t$) of the mobile agents ($s_t$) at a current time step (t);
   S300) passing the current state ($s_t$) of the mobile agents at a present time step (0) through a machine-learned prediction model (SE,PM) taking into account at least the current shared context (M,C), thereby obtaining successive encoded intermediate values (es1-es7), and calculating at least said future state ($s_{t+1}$) based on of the intermediate value obtained last (es7);

   wherein step S300 comprises a sub-step S360 of:

   S360) determining predicted destinations (PLj) at a predetermined time horizon ($T_f$) in the future for at least part of the mobile agents (MAi), using a machine-learned model (DE); and
   at step S300, an encoded value used to calculate at least said future state ($s_{t+1}$) is calculated based on the predicted destinations (g).

2. The prediction method according to claim 1, wherein

   a base encoder is a model configured to input, for each agent among a plurality of mobile agents (MAi), the pose and the attribute of the agent, to process the poses of the agents via a positional encoder (PosE), and not to process the attributes of the agents via a positional encoder; and
   step S300) comprises a sub-step S310 of:

   S310) based on the current state ($s_t$) of the mobile agents at the current time step (t), calculating a first intermediate value (es1) of the mobile agents (MAi) using a state encoder (SE) comprising a base encoder; and
   at step S300, said future state ($s_{t+1}$) is calculated based on said first intermediate value (es1).

3. The prediction method according to claim 1 or 2, wherein

   a base encoder is a model configured to input, for each agent among a plurality of mobile agents (MAi), the pose and the attribute of the agent, to process the poses of the agents via a positional encoder (PosE), and not to process the attributes of the agents via a positional encoder; and
   step 300 comprises a sub-step S320 of:

   S320) based on the map (M), calculating an encoded map (em) with a machine-learned model (ME) comprising a base encoder; and
   adapting one of the successive intermediate value (es6), based on the encoded map (em), using a dot-product attention, to obtain a next one of the intermediate values.

**4.** A prediction method according to any one of claims 1 to 3, wherein
step 300 comprises a sub-step S370 of:

S370) calculating a personality (z) for at least part of (preferably all) the mobile agents with a machine-learned model, the personality unit (PU); the personality being a low-dimensional feature; and
adapting one of the successive intermediate value (es6), based on the personality (z), to obtain a next one of the intermediate values.

**5.** A prediction method according to claims 2 and 4, wherein
the personality unit is configured to input data representative of the map (em) and of the traffic-lights data (ec), and the first intermediate value (es1).

**6.** A prediction method according to claim 4 or 5, wherein the personality unit (PU) is a conditional variational auto-encoder..

**7.** The prediction method of any one of claims 1 to 6, wherein the current shared context further comprises traffic lights data (C); the traffic lights data being data representative of a current state of traffic lights (C1-C4) present in the scene.

**8.** The prediction method according to claim 7, wherein

a base encoder is a model configured to input, for each agent among a plurality of mobile agents (MAi), the pose and the attribute of the agent, to process the poses of the agents via a positional encoder (PosE), and not to process the attributes of the agents via a positional encoder; and
step S300 comprises a sub-step S330 of:

S330) based on current traffic lights data (C), calculating encoded traffic lights data (ec) with a machine-learned encoder (TLE) comprising a base encoder; and
adapting one of the successive intermediate values (es2), based on the encoded traffic lights data (ec), using dot-product attention, to calculate a next one (es3) of the intermediate values.

**9.** The prediction method according to any one of claims 1 to 8, wherein step S300 comprises a sub-step S340 of:
S340) adapting one of the successive intermediate value (es3) using a machine-learned model, the Interaction Transformer (IT), configured to implement a self-attention mechanism for which the key, the value and the output are the same, to calculate a next one (es4) of the intermediate values.

**10.** The prediction method of claim 1, wherein step S300 comprises a sub-step S350 of:
S350) adapting one of the successive intermediate value (es4), based on the encoded traffic lights data (ec), using a machine-learned model, the Temporal Unit (TU), which comprises a recurrent unit for each of the mobile agents, to calculate a next one (es5) of the intermediate values.

**11.** The prediction method of claim 1, wherein step S300 comprises a sub-steps S370 and S380 of:

S370) passing a last obtained value (es7) of the intermediate values through at least one action unit (AU), the at least one action unit being configured to output, for each mobile agent, a datum representative of a derivative value of the state of the agent; and
S380) calculating the future state (st+1) by integrating said data representative of the derivative values, for the mobile agents.

**12.** A simulation method for simulating traffic, comprising iteratively calculating future states of mobile agents present in as scene, the future states being predicted using a method according to any one of claims 1 to 11.

**13.** A control method for a machine, the method comprising iteratively calculating controls to control the machine over successive iterations; wherein

in at least part of the iterations, the controls are calculated based on a future state of mobile agents present around the machine;
in which the future state of the mobile agents being predicted using a method according to any one of claims 1 to 11.

14. One or more computer program(s) comprising instructions which, when the instructions are executed by a computer, cause the computer to carry out the steps of a method according to any one of claims 1 to 13.

15. A non-transitory computer readable medium (111), having the one or more computer program(s) according to claim 14 stored thereon.

16. A computer-implemented system (200) comprising one or more processors (112) and a computer-readable medium (111) according to claim 15.

**Amended claims in accordance with Rule 137(2) EPC.**

1. A control method for a machine, the method comprising iteratively calculating controls to control the machine over successive iterations; wherein

   in at least part of the iterations, the controls are calculated based on a future state of mobile agents present around the machine;
   in which the future state of the mobile agents are predicted using a computer-implemented prediction method for predicting at least a future state $(s_{t+1})$ at a future time step $(t+1)$ of at least a part of a plurality of real or virtual mobile agents present in a scene, the state $(s_t)$ of said mobile agents comprising, for each of said mobile agents, at least a pose and an attribute (u) of the agent, the pose of an agent including at least a 2D position of the agent and an angle $(\theta)$ indicating the orientation of the agent, the attribute (u) including no positional variable (x,y) and no orientation angle $(\theta)$;
   the prediction method comprising performing the following steps:

   S100) obtaining a current shared context (M,C), the current shared context being data comprising at least a map (M) descriptive of stationary elements of the scene;
   S200) obtaining at least a current state $(s_t)$ of the mobile agents $(s_t)$ at a current time step (t);
   S300) passing the current state $(s_t)$ of the mobile agents at a present time step (0) through a machine-learned prediction model (SE,PM) taking into account at least the current shared context (M,C), thereby obtaining successive encoded intermediate values (es1-es7), and calculating at least said future state $(s_{t+1})$ based on of the intermediate value obtained last (es7);

   wherein step S300 comprises a sub-step S360 of:

   S360) determining predicted destinations (PLj) at a predetermined time horizon $(T_f)$ in the future for at least part of the mobile agents (MAi), using a machine-learned destination encoder model (DE); and
   at step S300, an encoded value used to calculate at least said future state $(s_{t+1})$ is calculated based on the predicted destinations (g).

2. The control method according to claim 1, wherein

   a base encoder is a model configured to input, for each agent among a plurality of mobile agents (MAi), the pose and the attribute of the agent, to process the poses of the agents via a positional encoder (PosE), and not to process the attributes of the agents via a positional encoder; and
   step S300) comprises a sub-step S310 of:

   S310) based on the current state $(s_t)$ of the mobile agents at the current time step (t), calculating a first intermediate value (es1) of the mobile agents (MAi) using a state encoder (SE) comprising a base encoder; and
   at step S300, said future state $(s_{t+1})$ is calculated based on said first intermediate value (es1).

3. The control method according to claim 1 or 2, wherein

   a base encoder is a model configured to input, for each agent among a plurality of mobile agents (MAi), the pose and the attribute of the agent, to process the poses of the agents via a positional encoder (PosE), and not to process the attributes of the agents via a positional encoder; and
   step 300 comprises a sub-step S320 of:

S320) based on the map (M), calculating an encoded map (em) with a machine-learned model (ME) comprising a base encoder; and
adapting one of the successive intermediate value (es6), based on the encoded map (em), using a dot-product attention, to obtain a next one of the intermediate values.

4. Thecontrol method according to any one of claims 1 to 3, wherein
step 300 comprises a sub-step S370 of:

S370) calculating a personality (z) for at least part of (preferably all) the mobile agents with a machine-learned model, the personality unit (PU); the personality being a low-dimensional feature; and
adapting one of the successive intermediate value (es6), based on the personality (z), to obtain a next one of the intermediate values.

5. Thecontrol method according to claims 2 and 4, wherein
the personality unit is configured to input data representative of the map (em) and of the traffic-lights data (ec), and the first intermediate value (es1).

6. Thecontrol method according to claim 4 or 5, wherein the personality unit (PU) is a conditional variational auto-encoder..

7. The control method of any one of claims 1 to 6, wherein the current shared context further comprises traffic lights data (C); the traffic lights data being data representative of a current state of traffic lights (C1-C4) present in the scene.

8. The control method according to claim 7, wherein

a base encoder is a model configured to input, for each agent among a plurality of mobile agents (MAi), the pose and the attribute of the agent, to process the poses of the agents via a positional encoder (PosE), and not to process the attributes of the agents via a positional encoder; and
step S300 comprises a sub-step S330 of:

S330) based on current traffic lights data (C), calculating encoded traffic lights data (ec) with a machine-learned encoder (TLE) comprising a base encoder; and
adapting one of the successive intermediate values (es2), based on the encoded traffic lights data (ec), using dot-product attention, to calculate a next one (es3) of the intermediate values.

9. The control method according to any one of claims 1 to 8, wherein step S300 comprises a sub-step S340 of:
S340) adapting one of the successive intermediate value (es3) using a machine-learned model, the Interaction Transformer (IT), configured to implement a self-attention mechanism for which the key, the value and the output are the same, to calculate a next one (es4) of the intermediate values.

10. The control method of claim 1, wherein step S300 comprises a sub-step S350 of:
S350) adapting one of the successive intermediate value (es4), based on the encoded traffic lights data (ec), using a machine-learned model, the Temporal Unit (TU), which comprises a recurrent unit for each of the mobile agents, to calculate a next one (es5) of the intermediate values.

11. The control method of claim 1, wherein step S300 comprises a sub-steps S370 and S380 of:

S370) passing a last obtained value (es7) of the intermediate values through at least one action unit (AU), the at least one action unit being configured to output, for each mobile agent, a datum representative of a derivative value of the state of the agent; and
S380) calculating the future state (st+1) by integrating said data representative of the derivative values, for the mobile agents.

12. One or more computer program(s) comprising instructions which, when the instructions are executed by a computer, cause the computer to carry out the steps of a control method according to any one of claims 1 to 11.

13. A non-transitory computer readable medium (111), having the one or more computer program(s) according to claim 12 stored thereon.

14. A computer-implemented system (200) comprising one or more processors (112) and a computer-readable medium (111) according to claim 13.

**FIG.1**

**FIG.2**

1000

100

Perception | Cameras | Lidars | Radars |

S110 — SDPPU: Sensor data pre-processing unit — S210

200 — $(x, y, \theta)_i$

S320 — SE: State Encoder — S310

Shared context

M → ME: Map Encoder — em → MT: Map Transformer — es1

C → TLE: Traffic Lights Encoder — ec → TVST: TVS Transformer — es2

S330

es3 — IT: Interaction Transformer — S340

es4 — TU: Temporal Unit — S350

es5 — S360

DCU: Destination Combination Unit — g → DE: Destination Encoder

Private context

es6 — S370

PCU: Personality Combination Unit — z → PE: Personality Encoder

PM

es7

AU: Action Unit — AU: Action Unit — AU: Action Unit — S380

$A_v$ — $A_b$ — $A_p$

DU: Dynamics Unit — DU: Dynamics Unit — DU: Dynamics Unit — S390

$S_{v,t+1}$ — $S_{b,t+1}$ — $S_{p,t+1}$

300

$S_{t+1}$

Control

# FIG.3

Map M

| Base Encoder |
| Polyline Subgraph Transformer |
| Nodes Max Pool |
| Global Graph Transformer |

Encoded Map em

# FIG.4

Encoded Traffic Lights ec          Encoded State es

Encoded Map em

| Map Transformer |
| Traffic lights Transformer |
| Interaction Transformer |
| Temporal Unit |
| Temporal Max Pool |
| Diagonal Gaussian |

Latent Personality z

# FIG.5

**FIG.6**

Query Q                    Key K, Value V

Layer Norm                 Layer Norm

Multi-Head Attention

Add

Layer Norm

2-Layer MLP

Add

**FIG.7**

Reached Indicator for Destination
Persona. or Dest.          Intermediate States (es5, es6)

Concat Last Dim

2-Layer MLP

Masking

Add

es6, es7

| | Europäisches Patentamt<br>European Patent Office<br>Office européen des brevets | **EUROPEAN SEARCH REPORT** | **Application Number**<br>**EP 22 18 1077** |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | ELMIRA AMIRLOO ET AL: "LatentFormer: Multi-Agent Transformer-Based Interaction Modeling and Trajectory Prediction",<br>ARXIV.ORG, CORNELL UNIVERSITY LIBRARY, 201 OLIN LIBRARY CORNELL UNIVERSITY ITHACA, NY 14853,<br>3 March 2022 (2022-03-03), XP091176532,<br>* abstract; figures 1, 2, 3, 5 *<br>* page 3, column 1, line 31 - column 2, line 27 *<br>* page 4, column 1, line 7 - page 5, column 2, line 28 *<br>* page 6, column 1, line 1 - line 33 *<br>----- | 1-16 | INV.<br>G06N3/0442<br>G06N3/045<br>G06N3/047<br>G06N3/0475<br>G06N3/09<br>G08G1/01 |
| A | GAO JIYANG ET AL: "VectorNet: Encoding HD Maps and Agent Dynamics From Vectorized Representation",<br>2020 IEEE/CVF CONFERENCE ON COMPUTER VISION AND PATTERN RECOGNITION (CVPR), IEEE,<br>13 June 2020 (2020-06-13), pages 11522-11530, XP033805513,<br>DOI: 10.1109/CVPR42600.2020.01154<br>[retrieved on 2020-08-03]<br>* abstract; figures 1, 2 *<br>* page 11522, column 1, line 1 - column 2, line 5 *<br>* page 11523, column 1, line 12 - column 2, line 21 *<br>* page 11524, column 2, line 5 - line 22 *<br>----- | 5,7,8,10 | |
| | -/-- | | TECHNICAL FIELDS<br>SEARCHED (IPC)<br><br>G06N<br>G08G |

The present search report has been drawn up for all claims

| Place of search | Date of completion of the search | Examiner |
|---|---|---|
| The Hague | 11 January 2023 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 22 18 1077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAO CHENG ET AL: "AMENet: Attentive Maps Encoder Network for Trajectory Prediction", ARXIV.ORG, CORNELL UNIVERSITY LIBRARY, 201 OLIN LIBRARY CORNELL UNIVERSITY ITHACA, NY 14853, 15 June 2020 (2020-06-15), XP081696328, * abstract; figures 1, 2 * * page 10, line 3 - line 26 * ----- | 6 | |
| A | HANG ZHAO ET AL: "TNT: Target-driveN Trajectory Prediction", ARXIV.ORG, CORNELL UNIVERSITY LIBRARY, 201 OLIN LIBRARY CORNELL UNIVERSITY ITHACA, NY 14853, 19 August 2020 (2020-08-19), XP081743980, * abstract; figures 1, 2, 3 * * page 3, line 16 - line 47 * * page 4, line 13 - page 5, line 23 * ----- | 1-16 | |

**TECHNICAL FIELDS SEARCHED (IPC)**

The present search report has been drawn up for all claims

| Place of search | Date of completion of the search | Examiner |
|---|---|---|
| The Hague | 11 January 2023 | Rousset, Antoine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. GAO ; C. SUN ; H. ZHAO ; Y. SHEN ; D. ANGUELOV ; C. LI ; C. SCHMID.** Vectomet: Encoding hd maps and agent dynamics from vectorized representation. *CVPR,* 2020
- **D. HA ; J. SCHMIDHUBER.** Recurrent world models facilitate policy evolution. *Advances in Neural Information Processing Systems (NeurIPS),* 2018
- **J. NGIAM ; B. CAINE ; V. VASUDEVAN ; Z. ZHANG ; H.-T. L. CHIANG ; J. LING ; R. ROELOFS ; A. BEWLEY ; C. LIU ; A. VENUGOPAL.** Scene Transformer: A unified architecture for predicting multiple agent trajectories. *International Conference on Learning Representations (ICLR),* 2022
- **S. SUO ; S. REGALADO ; S. CASAS ; R. UR-TASUN.** TrafficSim: Learning to simulate realistic multi-agent behaviors. *IEEE Conference on Computer Vision and Pattern Recognition (CVPR),* 2021

- **M. ZHOU ; J. LUO ; J. VILLELA ; Y. YANG ; D. RUSU ; J. MIAO ; W. ZHANG ; M. ALBAN ; I. FADAKAR ; Z. CHEN.** SMARTS: Scalable multi-agent reinforcement learning training school for autonomous driving. *Conference on Robot Learning (CoRL),* 2020
- **S. ETTINGER ; S. CHENG ; B. CAINE ; C. LIU ; H. ZHAO ; S. PRADHAN ; Y. CHAI ; B. SAPP ; C. QI ; Y. ZHOU.** Large Scale Interactive Motion Forecasting for Autonomous Driving: The Waymo Open Motion Dataset. *ICCV,* 2021
- Trajectron++: Dynamically-feasible trajectory forecasting with heterogeneous data. **SALZMANN, T. ; IVANOVIC, B. ; CHAKRAVARTY, P. ; PAVONE, M.** ECCV. Springer, 2020, 683-700
- **VASWANI, ASHISH ; SHAZEER, NOAM ; PARMAR, NIKI et al.** Attention is all you need. *Advances in neural information processing systems,* 2017, vol. 30